# EUROPÄISCHE PATENTANMELDUNG

(11) **EP 3 926 779 A1**
(43) Veröffentlichungstag der Anmeldung: **22.12.2021**
(21) Anmeldenummer: 20180390.5
(22) Anmeldetag: 16.06.2020
(51) Int. Cl.: H02J 3/06, B60M 3/00

(54) **VERFAHREN ZUR LASTSTEUERUNG IN EINEM ELEKTRISCHEN SYSTEM UND ELEKTRISCHES SYSTEM**

(71) Anmelder: Schweizerische Bundesbahnen SBB, 3000 Bern (CH)
(72) Erfinder: Fuchs, Andreas, 3011 Bern (CH); Halder, Markus, 4556 Bolken (CH)
(74) Vertreter: Rutz & Partner

(57) **Zusammenfassung**

Das Verfahren dient der Laststeuerung in einem elektrischen System (ES), insbesondere einem Eisenbahnsystem, mit einer elektrische Anlage (A), die in Anlagesegmente (A1, A2, A3) aufgeteilt ist und die von einem Betriebsnetz (BN) gespeist wird, das in einem Netzverbund mit benachbarten Stromnetzen (BN1, BN2, BN3, BN4) arbeitet, die über externe Systemgrenzen (sge) bedarfsweise elektrische Energie austauschen, und/oder das in Netzsegmente (N1, N2, N3) aufgegliedert ist, die zu den Anlagesegmenten (A1, A2, A3) korrespondieren und die über interne Systemgrenzen (sgi) bedarfsweise elektrische Energie austauschen, und mit einem Leitsystem (LS) mit einem Leitprogramm (lp), welches die vom Betriebsnetz (BN) abgegebenen Leistungen sowie Lastgrenzen (LGv) oder deren Verläufe für das Betriebsnetz (BN) oder die Netzsegmente (N1, N2, N3) überwacht und entsprechende Leitinformationen (li) zur Laststeuerung bildet und an ein Laststeuersystem (CR) überträgt, das die Leitinformationen (li) anhand eines Steuerprogramms (cp) auswertet und Steuersignale (ci, cc, ct) zur Steuerung von überwachten Betriebseinheiten (BE) der elektrischen Anlage (A) bildet, wobei Frequenz-Messwerte (f_{N}) für die Netzfrequenz des Betriebsnetzes (BN) und Energiefluss-Messwerte (mi_{INT}, mi_{ExT}) für Energieflüsse an den externen Systemgrenzen (sge) und/oder an den internen Systemgrenzen (sgi) ermittelt und die Leitinformationen (li) unter Berücksichtigung der Frequenz-Messwerte (f) und der Energiefluss-Messwerte (mi_{INT}, mi_{ExT}) gebildet werden.

## Beschreibung

Die Erfindung betrifft ein Verfahren zur Laststeuerung in einem elektrischen System, insbesondere in einem Eisenbahnsystem, sowie ein elektrisches System, wie ein Eisenbahnsystem, das nach diesem Verfahren gesteuert und/oder geregelt wird.

Grundlagen der elektrischen Laststeuerung sind z.B. im UIE Report, »Electric Load Management in Industry«, vom Januar 2009 beschrieben. Der Report weist darauf hin, dass elektrische Energie nicht in grossem Umfang wirtschaftlich gespeichert werden kann und zum gleichen Zeitpunkt und in der gleichen Menge, wie sie tatsächlich benötigt wird, produziert und vom Stromerzeuger über Übertragungsleitungen zum Verbraucher übertragen werden muss. Aufgrund dieser Besonderheiten muss das Stromversorgungssystem für den maximal zu erwartenden Bedarf ausgelegt werden. Im Falle der Elektrizität ist daher der Maximalbedarf an elektrischer Energie der hauptsächliche Kostentreiber für die festen Betriebskosten, während die Zeit des Energiekonsums die variablen Kosten beeinflusst.

Dem Lastmanagement liegt die Erkenntnis zugrunde, dass es möglich ist, im Wesentlichen den gleichen Nutzeffekt (d.h. gleichen Komfort und gleiche Produktivität) zu erreichen, wenn der Zeitpunkt und die Menge des verbrauchten Stroms gemäss entsprechend gewählten Regeln geändert werden. Sofern diese Regeln optimal gewählt sind, werden die Nutzer normalerweise keine Beeinträchtigungen bemerken.

Basierend auf diesen Prinzipien wurden Laststeuerungstechniken entwickelt, welche den Leistungsbezug steuern und die Betriebseffizienz bestehender Versorgungseinrichtungen erhöhen und dem Ausbaubedarf Schranken setzen. Durch Laststeuerungstechniken werden Lastspitzen vermieden und der Energiebedarf geglättet.

Von besonderer Bedeutung ist das Lastmanagement in elektrischen Eisenbahnanlagen, die generell einen hohen Energiebedarf und Lastspitzen im Traktionsbereich aufweisen, die sich mit Einführung von Taktfahrplänen signifikant erhöht haben.

Aus der EP3056379A1 ist ein Laststeuerungsverfahren bekannt, bei dem aus der Gesamtlast einer Eisenbahnlage mehrere Verläufe von Lastkomponenten sowie deren zukünftige Verläufe in Summe ermittelt werden. Anhand der Verläufe der Gesamtlast lassen sich zukünftige Zeitintervalle identifizieren, in denen die Wahrscheinlichkeit von Lastspitzen erhöht ist. Die Verwendung von Echtzeit-Daten aus dem Bahnbetrieb erlaubt somit eine Vorausschau auf das zukünftige Lastprofil. Höchste Lastspitzen selber, erzeugt durch die Nachfrage von Traktionsmotoren, sind aktuell noch nicht prognostizierbar.

Die EP2505416A1 offenbart ein Verfahren zur Bereitstellung elektrischer Energie für eine Eisenbahnanlage, umfassend das Ermitteln der aktuell fahrenden Schienenfahrzeuge und deren Fahrparameter; das Ermitteln des Lastzustandes im Betriebsnetz der Eisenbahnanlage; das Anheben der Geschwindigkeit mindestens eines Schienenfahrzeugs über eine fahrplanmässig vorgesehene Reisegeschwindigkeit im Falle einer unterhalb eines Lastoptimums gelegenen Lastzustandes und das Absenken der Geschwindigkeit mindestens eines Schienenfahrzeugs zur rekuperativen Einspeisung von elektrischer Energie im Falle eines oberhalb eines Lastoptimums gelegenen Lastzustandes.

Die EP2799307A1 offenbart eine Steuerungsvorrichtung, mittels der eine Gruppe von Eisenbahnzügen, die in einer Eisenbahnanlage verkehren, in Abhängigkeit von Zugdiagrammen und einer vorgegebenen maximalen Leistungsaufnahme derart gesteuert wird, dass die aktuelle Leistungsaufnahme unterhalb der vorgegebenen maximalen Leistungsaufnahme liegt. Dazu erstellt die Steuervorrichtung anhand der Zugdiagramme und der daraus resultierenden Zuglaufpläne einen Energiebedarfsplan und ermittelt Lastwerte, welche die vorgegebene maximale Leistungsaufnahme überschreiten.

Die beschriebenen Verfahren erlauben es, mit bestimmten Massnahmen Lastverläufe auszugleichen. Die Verfahren erlauben jedoch nicht, in komplexen Systemen Lastkorrekturmassnahmen zu treffen, die systemweit optimal sind und alle wesentlichen Einflussfaktoren berücksichtigen. Möglicherweise werden Massnahmen veranlasst, die isoliert betrachtet erforderlich, in der Systembetrachtung jedoch nicht optimal oder gar kontraproduktiv sind.

Der vorliegenden Erfindung liegt daher die Aufgabe zugrunde, ein verbessertes Verfahren zur Laststeuerung in einem elektrischen System, insbesondere in einer Eisenbahnanlage, sowie ein verbessertes elektrisches System, wie eine Eisenbahnanlage, zu schaffen, das nach diesem Verfahren gesteuert und/oder geregelt wird.

Mittels des Verfahrens soll das elektrische System derart steuerbar und/oder regelbar sein, dass die getroffenen Massnahmen zur Laststeuerung nicht nur isoliert betrachtet, sondern systemweit optimal gewählt sind.

Anhand des erfindungsgemässen Verfahrens soll der Ausbaubedarf des Betriebsnetzes und des Verbundnetzes reduziert und tief gehalten werden können.

Systemweit sollen nicht nur Lastspitzen reduziert, sondern optimale Betriebsbedingungen sichergestellt werden dadurch, dass je nach Fall weniger oder mehr Leistung bezogen wird.

Das erfindungsgemässe elektrische System soll ferner derart betrieben werden können, dass vereinbarte Belastungen des Energieversorgungssystems eingehalten werden können, und der Betreiber der Betriebsvorrichtung seinen Energiebedarf durch Einhaltung der Verträge kostengünstig decken kann.

Weiterhin soll das erfindungsgemässe Verfahren mit bereits bestehenden Verfahren derart kombinierbar sein, dass die Funktionalitäten bestehender Verfahren nutzbar und erfindungsgemäss erweiterbar sind.

Sofern das elektrische System zur Speicherung elektrischen Energie geeignete Betriebseinheiten umfasst, so sollen die Möglichkeiten zur Energiespeicherung genutzt werden, um die Interessen des Netzverbundes und der Energieerzeuger sowie des Betreibers des elektrischen Systems optimal zu erfüllen.

Diese Aufgabe wird mit einem Verfahren nach Anspruch 1 und einem nach diesem Verfahren arbeitenden elektrischen System nach Anspruch 17 gelöst. Vorteilhafte Ausgestaltungen der Erfindung sind in weiteren Ansprüchen angegeben.

Das Verfahren dient der Laststeuerung in einem elektrischen System, insbesondere einem Eisenbahnsystem,
mit einer elektrische Anlage, die in Anlagesegmente aufgeteilt ist und die von einem Betriebsnetz gespeist wird, das in einem Netzverbund mit benachbarten Stromnetzen, die über externe Systemgrenzen bedarfsweise elektrische Energie austauschen, arbeitet, und/oder das in Netzsegmente aufgegliedert ist, die zu den Anlagesegmenten korrespondieren und die über interne Systemgrenzen bedarfsweise elektrische Energie austauschen, und
mit einem Leitsystem mit einem Leitprogramm, welches die vom Betriebsnetz abgegebenen Leistungen sowie Lastgrenzen oder Verläufe von Lastgrenzen für das Betriebsnetz oder die Netzsegmente überwacht und entsprechende Leitinformationen an ein Laststeuersystem überträgt, das die Leitinformationen anhand eines Steuerprogramms auswertet und Steuersignale zur Steuerung von Betriebseinheiten der elektrischen Anlage bildet,
wobei Frequenz-Messwerte für die Netzfrequenz des Betriebsnetzes und Energiefluss-Messwerte für Energieflüsse an den externen Systemgrenzen und/oder an den internen Systemgrenzen ermittelt und die Leitinformationen unter Berücksichtigung der Frequenz-Messwerte und der Energiefluss-Messwerte gebildet werden.

Das erfindungsgemässe elektrische System ist zur Durchführung des erfindungsgemässen Verfahrens geeignet.

Die Lastgrenze definiert die maximal zulässige Menge an Betriebsstrom, der aus dem Betriebsnetz abgerufen werden darf. Überschreitungen der Lastgrenze sind nicht oder nur gemäss vorgegebenen Vorschriften, gegebenenfalls für kurze Zeitperioden und bestimmte Stromwerte zulässig. Generell soll spätestens ein Überschreiten der Lastgrenzen zu Korrekturmassnahmen, insbesondere selektiven Lastabschaltungen führen. Die Lastgrenzen sind in diesem Sinne Schwellwerte, die von Programmen zur Steuerung und Regelung der Lasten überwacht werden.

Die vorgegebenen Lastgrenzen werden ferner insbesondere auch im Rahmen der Speicherung elektrischer Energie in den dazu vorgesehenen Betriebseinheiten überwacht. Sofern die Speicherung elektrischer Energie durch Leitinformationen vorgeschrieben wird, erfolgt die Speicherung elektrischer Energie vorzugsweise durch das Laststeuersystem, soweit es die Leitinformationen vorschreiben und die Lastgrenzen erlauben. Die erfindungsgemässe Überwachung der Energieflüsse und der Netzfrequenz erlaubt wiederum in der Gesamtbetrachtung optimale Massnahmen zu treffen, um Energie zu speichern und bedarfsweise wieder freizugeben.

Das erfindungsgemässe Verfahren liefert daher wertvolle Informationen insbesondere zu Rahmenbedingungen für ein verbessertes Lastmanagement, gemäss dem die Zeitpunkte und die Mengen des Stromverbrauchs und der Stromspeicherung bzw. Energiespeicherung und Energiefreigabe geändert werden, um in der Gesamtbetrachtung ein optimiertes Betriebsergebnis zu erzielen. Die Energiespeicherung und Energiefreigabe kann Energiewandler und beliebige Formen der Energiespeicherung, wie Energiespeicherung in Wasser, einschliessen.

Das Leitsystem und das Laststeuersystem umfassen Applikationen, welche aus einem oder mehreren Softwaremodulen in einem oder mehreren zentral oder dezentral angeordneten Rechnern bestehen können. Das Laststeuersystem kann somit in einem Rechner oder in einem Verbund von Rechnern implementiert sein. Der Begriff «Rechner» beschreibt daher eine hardwarebasierte oder softwarebasierte Lösung oder Applikation, die auch in einem Rechenzentrum auf virtuellen Maschinen laufen kann.

Von vielen vernetzten Rechnern hat wenigstens ein Rechner oder eine Applikation die Aufgabe, nach vorgegebenen Regeln, die von den Leitinformationen des Leitsystems beeinflussbar sind, Lastschaltkommandos zu generieren. Andere Rechner dienen z.B. für Messaging-Dienste, zur Realisierung von Schnittstellen-Funktionen, als Inventar-Datenbanken, als Datenbanken mit Betriebsdaten z.B. betreffend Fahrzeugstandorte und Fahrpläne von Fahrzeugen und als Datenbanken mit Topologie-Informationen, wie Informationen des Gleisnetzes. Ein «Lastrechner» ist in Realität auch ein Verbund von Rechnern, auf denen virtuelle Maschinen laufen, auf denen wiederum die Applikation Laststeuerung läuft, welche nach überlagerten Regeln Lastschaltkommandos generiert.

Zu beachten ist, dass die Leitinformationen, die von der Leitebene zur Steuerebene übertragen werden Rahmenbedingungen, Grenzwerte, Termine und Zeitperioden umfassen können, innerhalb denen Laständerungen durch die Laststeuerebene zu vollziehen sind. Die konkreten Massnahmen zur Realisierung der Laständerungen durch Regeln und Algorithmen werden auf der Steuerebene detailliert festgelegt. Hingegen können die Leitinformationen auch tiefer in die Lastregelmechanismen eingreifen und weiter spezifizierte Anweisungen vorgeben. Beispielsweise kann von der Leitebene die Priorisierung der Massnahmen vorgegeben werden. Auf der Leitebene kann z.B. festgelegt werden, dass die Reduktion der Heizströme Priorität vor der Reduktion der Traktionsströme hat oder umgekehrt.

Unter Berücksichtigung der vom Leitsystem vorgegebenen Rahmenbedingungen, gegebenenfalls der Lastgrenzwerte wird die Lastregelung in der Laststeuerebene vollzogen. Dabei wird vorgesehen, dass die Lasten oder Betriebseinheiten gegebenenfalls unter Berücksichtigung von Prioritäten zeitlich derart geschaltet werden, dass die Lastgrenzwerte nicht überschritten werden und die Betriebseinheiten ihre Aufgaben trotzdem möglichst optimal erfüllen.

Sofern Betriebseinheiten, z.B. Batterien, als Speichereinheiten dienen, und die Leitinformationen eine Energiespeicherung in der Anlage vorschreiben, so erfolgt der Speichervorgang unter Beachtung der vorgegebenen Lastgrenzen. Die Speicherung von Energie wird vom Leitsystem beispielsweise dann vorgegeben, wenn eine Überproduktion von Energie vorliegt und diese nicht zu erwünschten Konditionen an Nachbarnetze abgegeben werden kann oder wenn der Energiepreis tief ist und eine Energieübernahme aus Nachbarnetzen erwünscht ist. Als Indikatoren für entsprechende Entscheide dient wiederum die Ermittlung der Frequenz-Messwerte für die Netzfrequenz des Betriebsnetzes und der Energiefluss-Messwerte. Sofern Unterfrequenz, d.h. eine Frequenz unterhalb der Sollfrequenz des Betriebsnetzes, und/oder ein Energiezufluss von benachbarten Netzen vorliegt, wird auf eine Energiespeicherung und Ausschöpfung der Lastgrenzen und/oder gegebenenfalls der Belastungsgrenzen der Anlage vorzugsweise verzichtet. Sofern hingegen Überfrequenz, d.h. eine Frequenz oberhalb der Sollfrequenz des Betriebsnetzes, und/oder ein Energieabfluss in benachbarte Netze vorliegt, so werden die Lastgrenzen vorzugsweise ausgeschöpft, um Energie in den geeigneten Energieformen zu speichern.

ERFINDUNGSGEMÄSS werden die Laststeuermassnahmen unter Berücksichtigung von Energieflüssen im oder ins/oder aus dem elektrischen System festgelegt. Zusätzlich werden Frequenz-Messwerte für die Netzfrequenz des Betriebsnetzes ermittelt und die Leitinformationen unter Berücksichtigung der Frequenz-Messwerte gebildet. Unter Berücksichtigung der Netzfrequenz und der Berücksichtigung der Energieflüsse gelingt es, die Laststeuerung systemweit zu optimieren.

Für die den Anlagesegmenten zugeordneten Netzsegmente werden z.B. im Leitsystem vorzugsweise Leistungsbilanzen und gegebenenfalls weitere Zustandsgrössen oder Messwerte ermittelt und bei der Bildung der Leitinformationen und Laststeuersignale berücksichtigt. Die Leistungsbilanzen werden durch Bildung der Differenz zwischen den Energieflüssen, die den Netzsegmenten zugeführt und von diesen abgegeben werden, gebildet.

Die Lastgrenzen sind vorzugsweise variabel und werden hinsichtlich der ermittelten Frequenz-Messwerte für die Netzfrequenz des Betriebsnetzes gegebenenfalls der Netzfrequenzen in den Netzsegmenten, und der Energiefluss-Messwerte und vorzugsweise basierend auf weiteren Parametern, wie historischen Verbrauchsdaten, Energiepreisen, dem zu erwartenden Heizbedarf, Kapazitäten von Anlagen, vorzugsweise für jedes der Netzsegmente individuell festgelegt.

Die Lastgrenzen werden bei Ermittlung von Frequenz-Messwerten, die tiefer sind als ein Frequenz-Sollwert, abgesenkt, um die Lasten im Betriebsnetz zu reduzieren, und bei Ermittlung von Frequenz-Messwerten, die höher sind als ein Frequenz-Sollwert, angehoben werden, um höhere Lasten im Betriebsnetz zu erlauben. Frequenz-Messwerte zeigen, ob ein Netz oder Netzsegment "short" (Unterproduktion an Energie) oder "long" (Überproduktion an Energie) ist. Frequenzen gehen normalerweise nicht in Prognosen ein. Wiederkehrende Frequenzverläufe oder Frequenzmuster können hingegen durchaus berücksichtigt werden.

Ferner werden die Lastgrenzen bei Ermittlung von externen Energiefluss-Messwerten, die einen Energiefluss über die externen Systemgrenzen in das Betriebsnetz anzeigen, abgesenkt, um die Lasten im Betriebsnetz, insbesondere bei Vorliegen von Unterfrequenz, zu reduzieren, und bei Ermittlung von externen Energiefluss-Messwerten, die einen Energiefluss über die externen Systemgrenzen aus dem Betriebsnetz anzeigen, insbesondere bei Vorliegen von Überfrequenz angehoben, um höhere Lasten im Betriebsnetz zu erlauben. Ideale Betriebseinheiten bzw. Lasten zur Aufnahmen von Leistung in Überfluss sind mobile oder stationäre Batteriespeicher. Weiterhin werden individuell für die Anlagesegmente bestimmte Lastgrenzen vorzugsweise in Abhängigkeit der internen Energiefluss-Messwerte geändert. Bei Ermittlung von internen Energiefluss-Messwerten, die einen Energiefluss über die internen Systemgrenzen in zumindest eines der Netzsegmente des Betriebsnetzes anzeigen, werden die Lastgrenzen abgesenkt, um die Lasten in diesen Anlagesegmenten zu reduzieren, und/oder bei Ermittlung von internen Energiefluss-Messwerten, die einen Energiefluss über die internen Systemgrenzen aus zumindest einem der Netzsegmente des Betriebsnetzes anzeigen, werden die Lastgrenzen angehoben, um in diesen Anlagesegmenten höhere Lasten zu erlauben.

Der Verlauf der Lastgrenze bzw. Verläufe der Lastgrenzen können ferner, indirekt oder direkt als Leitgrösse oder Regelgrösse für die Speicherung elektrischer Energie, gegebenenfalls in Batterien, verwendet werden. Zusätzlich können weitere Informationen berücksichtigt werden. Auf diese Weise können die gegebenen Speichermöglichkeiten vorteilhaft zur Stabilisierung des Betriebsnetzes, zur Stabilisierung des Verbundnetzes und zur Kostenoptimierung verwendet werden.

Durch diese Massnahmen wird insbesondere den Verhältnissen auf der Seite der Energieerzeugung Rechnung getragen und zugleich das Energiemanagement hinsichtlich der Energiekosten optimiert. Anstelle der Überwachung einer konstanten Lastgrenze zur Vermeidung von Lastspitzen, welche diese konstante Lastgrenze überschreiten, wird eine variable Lastgrenze vorgesehen, welche unter Berücksichtigung aller wesentlichen und in der Regel veränderlichen Parameter oder Systemeinflüsse festgelegt wird, die im Verbundnetz auftreten. Diesen Parametern werden vorzugsweise unterschiedliche Prioritäten zugeordnet, damit in der Gesamtbetrachtung des Netzbetreibers stets ein optimales Resultat erzielt wird. Einflussparameter sind z.B. die Energienachfrage durch Traktion und durch HLK Anlagen sowie bahntechnische Anlagen, das Wetter, Verfügbarkeit von Anlagen, Kosten von Ausgleichsenergie.

Das erfindungsgemässe Verfahren zur Laststeuerung kann Module konventioneller Verfahren zur Laststeuerung verwenden, mittels denen eine Lastregelung oder Laststeuerung hinsichtlich einer Lastgrenze erfolgt. Beispielsweise können Verfahren zur Prognose eines Lastverlaufs eingesetzt werden, wonach die Lastregelung unter Berücksichtigung der ermittelten Lastprognose und der erfindungsgemäss festgelegten variablen Lastgrenze erfolgen. Dabei wird vorzugsweise vermieden, dass Lastspitzen die vorgegebene Lastgrenze überschreiten.

In bevorzugten Ausgestaltungen werden Statusinformationen zur physikalischen Belastung der Betriebseinheiten innerhalb der Anlage oder individuell innerhalb der Anlagesegmente und gegebenenfalls deren Belastungsgrenzen und die Überschreitung derselben ermittelt und zur Bestimmung der Leitinformationen oder im Laststeuersystem zur Bildung der Steuersignale verwendet.

Vorzugsweise werden innerhalb der Anlage oder individuell innerhalb der Anlagesegmente Temperaturen von Betriebseinheiten, wie Fahrzeuginnenräume, Heizungen, Schienen und Weichen, Fahrleitungen oder Energiewandler, z.B. Elektrolyseure oder Brennstoffzellen, gasbetriebene Generatorgruppen, Wärme-Kraft-Kopplungs-Einheiten, als Statusinformationen ermittelt, um die Belastungen und die physikalischen Lastgrenzen der Anlage, der Anlagesegmente oder der Betriebseinheiten zu ermitteln.

Die Laststeuerung erfolgt daher nicht nur einseitig aus dem Blickwinkel der Energieversorgung, gegebenenfalls der Energieversorgungskosten, sondern auch unter Berücksichtigung des Zustandes der Anlage, der Anlagesegmente und der Betriebseinheiten. Das Auftreten von Lastspitzen ist daher nicht mehr allein bestimmend für die Laststeuerung.

Lastspitzen haben in der Regel höhere oder hohe Energiekosten zur Folge, ohne dass Folgeschäden auftreten. Belastungsspitzen in der Anlage können hingegen zum Ausfall von Elementen der Anlage mit weit höheren Folgekosten führen. Einerseits müssen die Teile der Anlage bzw. Betriebseinheiten wieder instand gesetzt oder ersetzt werden. Andererseits resultieren aufgrund von Ausfällen der Anlage entsprechende Kosten seitens des Betreibers und Nutzer der Anlage. In Eisenbahnsystemen mit stetig höherer Auslastung ist die Vermeidung von Überbelastungen daher besonders wichtig und zumeist vorrangig vor den Energiekosten.

Zur Reduktion der Belastung des Betriebsnetzes werden die Lastgrenzen z.B. bei Überschreitung von Temperaturgrenzwerten abgesenkt. Diesbezügliche relevante Lasten werden reduziert, permanent abgeschaltet, phasenweise abgeschaltet oder in einen Notbetrieb versetzt.

Dem Leitsystem werden vorzugsweise systeminterne Daten, wie Betriebsdaten, Fahrplandaten, historische oder aktuelle Messdaten, wie Daten von Wetterstationen bei Weichenheizungen, oder Prognosen aus Meteo-Datenbanken, von einem Betriebsrechner sowie systemexterne Daten, wie Wetterprognosen und Kostendaten der elektrischen Energie, von einem externen Datenserver zugeführt. Unter Berücksichtigung dieser systeminternen und/oder systemexternen Daten kann das Leitsystem die Lastgrenzen oder zukünftige Verläufe der Lastgrenzen für das Betriebsnetz und/oder die Netzsegmente und/oder zulässige Belastungen der Anlage festlegen.

Das erfindungsgemässe Verfahren arbeitet daher nicht eindimensional, sondern mehrdimensional und optimiert einerseits physikalisch und monetär den Energiebezug und andererseits den Betrieb der Anlage, um Überlastungen zu vermeiden. Dem Begriff »Lastspitze«, welcher einen maximalen Energiebezug innerhalb einer Zeitperiode beschreibt, wird der Begriff »Belastungsspitze« gegenübergestellt, welcher eine maximale Belastung der Anlage oder Elementen der Anlage unter gegebenen Umständen innerhalb einer Zeitperiode beschreibt. Ziel ist es, sowohl Lastspitzen, als auch Spitzenbelastungen zu vermeiden, wobei Prioritäten wahlweise zugeordnet werden. Vorzugsweise wird der Vermeidung von Belastungsspitzen, die Anlageschäden verursachen können, eine höhere Priorität zugeordnet, als der Vermeidung von Lastspitzen oder der Glättung des Energieverbrauchs, welche Vorteile oder Nachteile hinsichtlich der Energiekosten zur Folge haben. Bei der Vermeidung von Belastungsspitzen und der Reduktion von Spitzenlasten wird insgesamt ein besseres Betriebsergebnis erzielt.

In einer weiteren bevorzugten Ausgestaltung werden innerhalb der Anlage oder individuell innerhalb der Anlagesegmente Statusinformationen zu den Betriebseinheiten ermittelt, anhand denen das Regelungspotenzial innerhalb der Anlage oder individuell innerhalb der Anlagesegmente ermittelt und im Leitsystem zur Bestimmung der Leitinformationen oder im Laststeuersystem zur Bildung der Steuersignale oder zur Festlegung der variablen Lastgrenzen verwendet wird.

Beispielsweise werden für Betriebseinheiten, wie Fahrzeuge, Heizungen oder Beleuchtungen, ein minimaler Energiebedarf, wie ein minimaler Energiebedarf für den Notfallbetrieb, und der aktuelle Energiebedarf vorzugsweise periodisch ermittelt, wonach durch Bildung der Differenz des aktuellen und des minimalen Energiebedarfs das Regelungspotenzial zur Reduktion der Last ermittelt wird. Vorzugsweise werden für Betriebseinheiten, wie Fahrzeuge oder Heizungen, stationäre oder mobile Batterien, insbesondere Batterien von batteriebetriebenen Lokomotiven oder Zügen, ein maximaler Energiebedarf und der aktuelle Energiebedarf vorzugsweise periodisch ermittelt werden, wonach durch Bildung der Differenz des aktuellen und des maximalen Energiebedarfs das Regelungspotenzial zur Erhöhung der Last ermittelt wird.

Das Regelungspotenzial wird vorzugsweise unter Berücksichtigung des Potenzials und der aktuellen Füllung der Speichereinheiten ermittelt. Ein hohes Potenzial nicht gefüllter Speicher erlaubt die kostengünstige Energieaufnahme aus anderen Betriebsnetzen. Ein hohes Potenzial gefüllter Speicher erlaubt die kurzfristige Kompensation von Lastspitzen.

Die Kenntnis des Regelungspotenzials ist besonders wertvoll, da ein hohes Regelungspotenzial erlaubt, kommende Lastspitzen problemlos zu kompensieren. Sofern ein geringes Regelungspotenzial vorhanden ist, welches zur Abdeckung zukünftig erwarteter Lastspitzen nicht ausreicht, so kann das Regelungspotenzial durch die Steuerung der Lasten, z.B. durch temporären Lastabwurf, wie die Abschaltung von Heizungen, oder durch Erhöhung der Ladung der Speichereinheiten erhöht werden.

Kenntnis des Regelungspotenzials und der Zustände der Betriebseinheiten erlaubt zudem ein intelligentes Schalten der Lasten. Beispielsweise werden beim Wegschalten von Heizungen bevorzugt zuerst die Fahrzeuge mit der höchsten Innenraumtemperatur- oder die Weichen mit der höchsten Schienentemperatur ausgewählt. Sofern hingegen genügend Energie gespeichert ist, kann Energie mit höchster Priorität aus Speichereinheiten abgerufen werden.

In vorzugsweisen Ausgestaltungen wird das Regelungspotenzial auf einen festen oder variablen Sollwert oder eine entsprechende Leitgrösse geregelt, welche sicherstellt, dass zukünftig notwendige Lastmanagement Massnahmen ohne Engpässe durchgeführt werden können. Der Sollwert oder die Leitgrösse werden vorzugsweise durch Ermittlung der zukünftigen Lastspitzen oder Spitzenbelastungen ermittelt. In Erwartung von Lastspitzen und Spitzenbelastungen soll dabei stets genügend Regelungspotenzial vorhanden sein.

Notfalls müssen bei begrenztem Regelungspotential und erwarteten, hohen Lastspitzen sicher genügend Kraftwerke und Frequenzumformer in Reserve gehalten oder effektiv zum Netz zugschaltet werden. Dies ist ein Beispiel dafür, dass genügend Leistung eine höhere Priorität hat als tiefe Energie- und Netzbetriebskosten.

Das erfindungsgemässe elektrische System ist zudem ein potenter Energiespeicher, welcher erlaubt thermische oder kinetische Energie zu speichern. Die Ermittlung des Regelungspotenzials hinsichtlich der Speicherkapazität des elektrischen Systems erlaubt daher, die zielgerichtete temporäre Speicherung von Energie, um diese anschliessend zur Kompensation von Lastspitzen zu verwenden. Vor Auftreten einer Lastspitze werden z.B. Heizleistungen und Traktionsleistungen während einer Periode vor Auftreten der Lastspitzen erhöht und bei Auftreten der Lastspitzen reduziert. Beispielsweise können stationäre oder mobile Batterien, insbesondere auf Batterien umgerüstete Dieselloks, die ans Netz angeschlossen sind, bei genügend vorhandener Leistung geladen und beim Auftreten von Lastspitzen entladen werden.

Ein hohes Regelungspotenzial erlaubt es, rasch in das System einzugreifen, um Korrekturen herbeizuführen. Die variablen Lastgrenzen können daher grosszügiger bemessen werden, da Veränderungen im elektrischen System, durch Einflüsse seitens der Anlage oder der Energieversorgung, rasch kompensiert werden können.

Das Leitprogramm des Leitsystems ist vorzugsweise zur Übernahme oder Erstellung und Verarbeitung von Lastprognosen und zur entsprechenden Bildung von Leitinformationen ausgebildet. Wie erwähnt können dazu bereits existierende Lösungen integriert werden. Die gebildeten Leitinformationen werden vom Steuerprogramm des Laststeuersystems in Steuersignale umgesetzt. Vorzugsweise werden Prognosen in verschiedenen Dimensionen erstellt und daraus zukünftige Verläufe der Lastgrenzen ermittelt und angewendet. In einer ersten Dimension werden zukünftige Lastverläufe bzw. wird ein zukünftiger Verlauf des Energiebedarfs ermittelt, damit das elektrische System seine Aufgaben erfüllen kann. Weiterhin werden vorzugsweise zukünftige Verläufe der Energieproduktion und gegebenenfalls entsprechende Kostenkurven ermittelt. Zusätzlich werden zukünftige Verläufe der Belastungen der Anlage ermittelt, die bei der Steuerung und Regelung berücksichtigt werden.

In vorzugsweisen Ausgestaltungen sind zumindest einige der Betriebseinheiten mit intelligenten Modulen versehen, welche selbsttätig Lastprognosen für ihren zukünftigen Betrieb erstellen und vorzugsweise periodisch an das Leitsystem, welches die Lastprognosen bei der Bildung der Leitinformationen berücksichtigt, oder an den Steuerrechner, welcher die Lastprognosen bei der Bildung der Steuersignale berücksichtigt, übertragen. Die Steuersignale können in einer Eisenbahnanlage z.B. in Steuersignale für die Steuerung der Infrastruktur, wie Beleuchtungen, Weichenheizungen oder Gebäudeheizungen, Steuersignale für die Traktionsmotoren von Zugfahrzeugen und Steuersignale für Einrichtungen der Züge, wie Wagenheizungen, aufgeteilt werden. Die intelligenten bzw. prozessorgesteuerten Module können auch zur Erstellung von Lastprognosen für die zugehörigen Betriebseinheiten verwendet werden.

In einer weiteren vorzugsweisen Ausgestaltung ist vorgesehen, dass das Leitsystem die Anlage in einem Modell abbildet und zumindest einem Teil der Betriebseinheiten je ein Software-Objekt mit Betriebsparametern und Eigenschaften zuordnet, die durch Kommunikation mit den zugehörigen Betriebseinheiten aktualisiert werden, wonach anhand des Modells Lastprognosen erstellt und Leitinformationen gebildet werden.

In einer anderen Ausführung erlauben lernende Algorithmen, das Verhalten einer Betriebseinheit kennen zu lernen. Kenntnis dieses Verhaltens ist Voraussetzung für die Erstellung optimaler Prognosen zukünftiger Lastverläufe und die Erzeugung optimaler Steuersignale.

Anhand des Modells können virtuell komplexe Zusammenhänge ermittelt und geeignete Laststeuerungsmassnahmen getroffen werden. Dazu kann das aus der EP2894074B1 bekannte Verfahren entsprechend angewendet werden, gemäss dem zur Überwachung der stationären und mobilen Betriebseinheiten einer Eisenbahnanlage, deren Objektdaten zusammen mit den zugehörigen geographischen Koordinaten erfasst und je in einem Objektdatensatz gespeichert werden. Die Anmeldung und Abmeldung der Betriebseinheiten in der Anlage wird durch das Leitsystem im Modell vorzugsweise automatisch nachgeführt.

Nachfolgend wird die Erfindung anhand von Zeichnungen näher erläutert. Dabei zeigt:

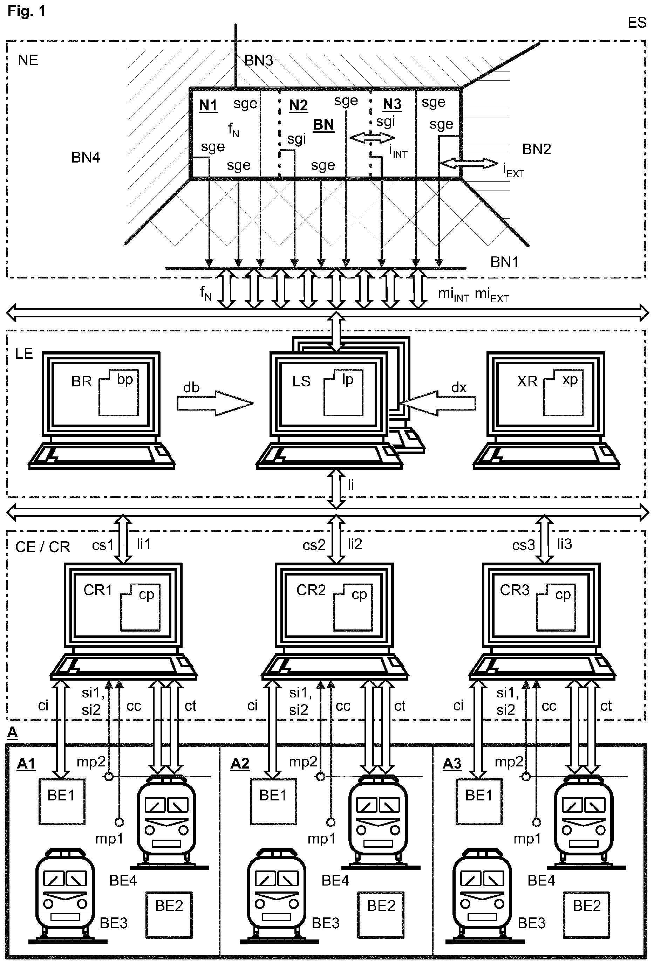

- Fig. 1: exemplarisch ein erfindungsgemässes elektrisches System ES mit einem Betriebsnetz BN, das in einem Netzverbund mit anderen Betriebsnetzen BN1, BN2, BN3, BN4 arbeitet und das Betriebseinheiten BE einer Eisenbahnanlage A, die drei Anlagesegmente A1, A2 und A3 umfasst, mit Energie versorgt, und mit einem Leit- und Steuersystem, welches eine Leitebene LE und eine Steuerungsebene CE aufweist; und

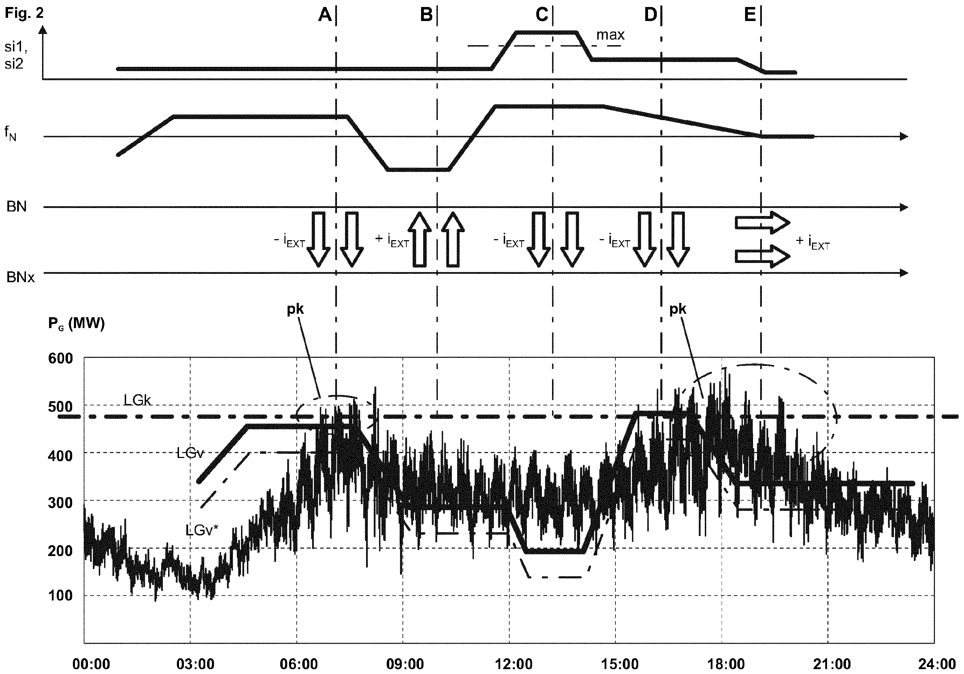

- Fig. 2: exemplarisch einen Verlauf der Gesamtlast PG im Betriebsnetz BN von Fig. 1, einen Verlauf der Netzfrequenz f_{N} mit Abweichungen von einem Sollwert, Energieflüsse zwischen dem Betriebsnetz BN und wenigstens einem Nachbarnetz BNx und einen Temperaturverlauf si1 in einem Anlagesegment A3 der Eisenbahnanlage A.

Fig. 1 zeigt ein erfindungsgemässes elektrisches System ES mit einem Betriebsnetz BN mit Netzsegmenten N1, N2, N3 in einer Netzebene NE, das in einem Netzverbund mit anderen Betriebsnetzen BN1, BN2, BN3, BN4, gegebenenfalls Betriebsnetzen anderer Länder, arbeitet und das mobile und/oder stationäre Betriebseinheiten BE einer Eisenbahnanlage A, die drei Anlagesegmente A1, A2, A3 aufweist, mit Energie versorgt.

Die Netzsegmente N1, N2, N3, welche die zugehörigen Anlagesegmente A1, A2, A3 mit Energie versorgen, sind durch interne Systemgrenzen sgi voneinander getrennt. Über diese internen Systemgrenzen sgi werden bei Überproduktion oder Unterproduktion in den betreffenden Netzsegmenten N1, N2, N3 oder Überlast oder Unterlast in den betreffenden Anlagesegmenten A1, A2, A3 bedarfsweise interne Ausgleichsströme i_{INT} ausgetauscht. Diese internen Ausgleichsströme i_{INT} werden gemessen und als interne Energiefluss-Messwerte mi_{INT} registriert.

Das Betriebsnetz BN und die anderen Betriebsnetze BN1, BN2, BN3, BN4 sind durch externe Systemgrenzen sge voneinander getrennt, über die externe Ausgleichsströme i_{EXT} übertragen werden, die gemessen und als externe Energiefluss-Messwerte mi_{ExT} registriert.

Ferner wird die Netzfrequenz fN im Betriebsnetz BN, vorzugsweise gegebenenfalls in allen Netzsegmenten N1, N2, N3 gemessen.

Zwischen dem Betriebsnetz BN und der Eisenbahnanlage A sind in einer Leitebene LE Module eines Leitsystems LS und in einer Steuerebene CE Module CR1, C2, CR3 eines Laststeuersystems CR vorgesehen. Das Leitsystem LS und das Laststeuersystem CR umfassen Softwaremodule, die in einer beliebigen Anzahl von zentralisiert oder dezentralisiert angeordneten und nur symbolisch gezeigten Rechnern LS, CR1, CR2, CR3 implementiert sind. Die Funktionen des Leitsystems LS und des Laststeuersystems CR können alternativ auf mehrere Ebenen oder nur eine Ebene aufgeteilt sein. Das Leitsystem LS und das Laststeuersystem CR können somit in vielfältigen Ausgestaltungen realisiert und an das Betriebsnetz BN und die Anlage A und deren Segmente angepasst werden. Das Leitsystem LS und das Laststeuersystem CR können zudem Basismodule zur Lastregelung aufweisen, die es erlauben, Lasten zu schalten, um prognostizierte Lastspitzen zu kompensieren respektive zu «schneiden».

Niederfrequente Wellen in der Lastkurve können prognostiziert und »geglättet« werden. Sofern Echtzeit-Betriebsdaten z.B. aus dem Rail Control System (RCS) fehlen, sind hochfrequente, scharfe Peaks aktuell nicht prognostizierbar und werden daher durch spontane Lastschalt-Eingriffe - durch «Schneiden von Spitzen» - kompensiert. D.h., Steuersignale werden erzeugt, um Lasten kurzfristig vom Netz zu nehmen oder Speicher kurzfristig zur Abgabe von Energie zu veranlassen.

Das Leitprogramm lp des Leitsystems LS ist vorzugsweise zur Übernahme oder Erstellung und Verarbeitung von Lastprognosen und zur entsprechenden Bildung von Leitinformationen li ausgebildet. Erfindungsgemäss werden die Leitinstruktionen li unter Berücksichtigung der ermittelten Frequenz-Messwerte f und der ermittelten internen und externen Energiefluss-Messwerte i_{INT}, i_{EXT} gebildet.

Auf diese Weise ist es möglich, dass Lastmanagement in der Gesamtbetrachtung und die entsprechenden Lastschaltmassnahmen zur Schaltung von Lasten sowie zur Speicherung und Freigabe von Energie zu optimieren. Durch optimierte Lastschaltmassnahmen werden konsequenterweise die Lastverläufe im Betriebsnetz BN optimiert und auch die Energieflüsse zwischen den einzelnen Netzen BN, BN1, BN2, BN3, BN4 vorteilhaft beeinflusst.

Das Steuerprogramm cp der Steuerebene CE ist zur Auswertung der Leitinformationen ausgelegt und verfügt über Regelungen/Steuerungen, die je nach Situation im Betriebsnetz BN nach bestimmten Regeln zu beeinflussende Betriebseinheiten BE auswählen und via Steuersignale ci, cc, ct die Leistungsaufnahme der betreffenden Betriebseinheiten BE entweder während Lastspitzen blockieren lassen («Lastspitzen schneiden») oder im Fall niederfrequenter Nachfrageschwankungen durch Leistungsmodulation der Betriebseinheiten BE Wellen in der Lastkurve «glätten». Beim Glätten verschiebt das Lastmanagement den Energiebezug oder die Energiespeicherung von einem Zeitintervall in ein anderes Zeitintervall. Diese Verschiebung kann in der Zeit zurück, oder vorwärts geschehen.

Zur Erfüllung dieser Aufgaben werden dem Leitsystem LS systeminterne Daten db, wie Betriebsdaten, Fahrpläne, historische Messdaten, Spezifikationen der Anlage A und Anlageelementen, insbesondere Grenzwerte für die Belastung, gegebenenfalls Lastprognosen, von einem Betriebsrechner BR sowie systemexterne Daten dx, wie Wetterprognosen und Kostendaten der elektrischen Energie, von einem externen Datenserver XR zugeführt. Unter Berücksichtigung der systeminternen und der systemexternen Daten db, dx bestimmt der Leitrechner LS Lastgrenzen oder zukünftige Verläufe der Lastgrenzen für das Betriebsnetz BN und/oder die Netzsegmente N1, N2, N3 oder Belastungsgrenzen oder zukünftige Verläufe der Belastungsgrenzen der Anlage A oder der Anlagesegmente A1, A2, A3. Die entsprechenden Daten werden im Betriebsrechner BR von einem Betriebsprogramm bp und im externen Rechner XR mittels eines Hilfsprogramms xp bereitgestellt.

Mit dem Leitsystem LS, welches die vom Betriebsnetz BN abgegebenen Leistungen sowie Lastgrenzen für das Betriebsnetz BN oder die Netzsegmente N1, N2, N3 überwacht, werden entsprechend einem implementierten Leitprogramm lp Leitinformationen li gebildet und zur Laststeuerung an das Laststeuersystem CR übertragen, das die Leitinformationen li anhand eines Steuerprogramms cp auswertet und Steuersignale ci, cc, ct zur Steuerung von überwachten Betriebseinheiten BE der elektrischen Anlage A bildet und an die Anlage A bzw. direkt an die Betriebseinheiten BE abgibt.

Das erfindungsgemässe Verfahren kann in beliebigen elektrischen Systemen, in denen wenigstens eine elektrische Anlage von wenigstens einem Drehstromnetz oder Gleichstromnetz mit Energie versorgt wird, implementiert werden. Drehstromnetze zur Versorgung von Haushalten, Gewerbe, Industrie, Verkehr mit elektrischer Energie bestehen normalerweise aus Teilnetzen mit unterschiedlicher Spannung. Die Kupplung der verschiedenen Spannungsebenen erfolgt über Drehstromtransformatoren. D. Oeding, B.R. Oswald, elektrische Kraftwerke und Netze, 8. Auflage, Springer-Verlag, Seite 400 (siehe Bild 12.1) zeigt und beschreibt den Aufbau eines Landesnetzes, das Verbundnetzfunktionen erfüllt und über Kopplungsleitungen mit benachbarten Landesnetzen verbunden ist. Je nach der Grösse der Kraftwerksblöcke speisen diese in die verschiedenen Spannungsebenen ein. Die Kupplung der Netze verschiedener Gesellschaften oder verschiedener Länder erfolgt meist auf der höchsten oder den beiden höchsten Spannungsebenen, also bei Un/Um = 380 kV/420 kV oder auch 220 kV/245 kV, möglichst ohne Zwischenschaltung von Transformatoren, um auch bei transienten Vorgängen im Netz, die durch Störungen ausgelöst wurden, ausreichende Austauschleistungen übertragen zu können.

Gleichstromnetze werden meistens mittels Gleichrichtern oder Frequenzumformern aus Drehstromnetzen gespeist. In vorteilhaften Ausführungen ist Rückspeisung vom Gleichstromnetz ins Drehstromnetz möglich. Wenn nicht, wird Lastmanagement absolut zwingend, um jederzeit Spannungsbereiche und Leistungsbilanzen einhalten zu können.

Bei der Beurteilung der Vorteile des Verbundbetriebes für die Zuverlässigkeit der Versorgung der einzelnen am Verbund teilnehmenden Netze ist nicht so sehr der Gesamtaustausch von Bedeutung, sondern die kurzfristige Leistungslieferung. Die Kuppelleitungen zwischen den Verbundpartnern sind deshalb nicht allein für den langfristig vereinbarten Energieaustausch auszulegen, sondern so, dass sie unter Berücksichtigung ihrer thermischen Grenzbelastbarkeit auch die im Notfall, aus der Erfahrung abzuleitenden, auszutauschenden Leistungen führen können (a.a.O., Seite 402).

Europäische Bahnstromsysteme mit Netzspannungen und Netzfrequenzen sind z.B. in https://de.wikipedia.org/wiki/Liste der Bahnstromsysteme beschrieben. Das in Fig. 1 gezeigte Betriebsnetz BN, welches die Anlage A mit Strom versorgt, arbeitet z.B. mit 15'000 V und einer Netzfrequenz f_{N} von 16 2/3 Hz. 16 2/3 Hz ist in dem Fall der Sollwert der Netzfrequenz f_{N}.

Vorzugsweise werden variable Lastgrenzen vorgesehen, welche unter Berücksichtigung aller wesentlichen und in der Regel veränderlichen Parameter oder Systemeinflüsse festgelegt werden, die im Verbundnetz auftreten. Diesen Parametern werden vorzugsweise unterschiedliche Prioritäten zugeordnet. Auf diese Weise ermittelte, variable Lastgrenzen können konventionellen Programmen zur Lastregelung als Leitgrössen vorgegeben werden. Das Lastmanagementsystem kann daher als eigenständige Einheit oder als modulares System aufgebaut werden, welches bereits bestehende Module einbindet.

Die variablen Lastgrenzen werden im vorliegenden Ausführungsbeispiel in Abhängigkeit der externen Energiefluss-Messwerte mi_{ExT} und unter Berücksichtigung der ermittelten Frequenz-Messwerte f_{N} geändert, wobei die Lastgrenzen bei Ermittlung von externen Energiefluss-Messwerten mi_{EXT}, die einen Energiefluss über die externen Systemgrenzen sge in das Betriebsnetz BN anzeigen, insbesondere bei Vorliegen von Unterfrequenz abgesenkt werden, um die Lasten im Betriebsnetz BN zu reduzieren. Bei Ermittlung von externen Energiefluss-Messwerten mi_{ExT}, die einen Energiefluss über die externen Systemgrenzen sge aus dem Betriebsnetz BN anzeigen, werden die Lastgrenzen insbesondere bei Vorliegen von Überfrequenz angehoben werden, um höhere Lasten im Betriebsnetz BN zu erlauben.

Das Absenken oder Erhöhen von Lastgrenzen bzw. der entsprechenden Schwellenwerte des Steuersystems hat zur Folge, dass unter Berücksichtigung der Lastgrenze, vorzugsweise nach festgelegten Priorisierungsregeln, Lasten ausgewählt werden, die dann entweder ein Triggersignal zum Wegschalten oder Zuschalten, oder einen «Fahrplan» für die Modulation des Leistungsbezug erhalten und ausführen. Ferner erfolgt die Energiespeicherung, wie beschrieben.

In gleicher Weise werden die Lastgrenzen für die Anlagesegmente A1, A2, A3 bei Ermittlung von internen Energiefluss-Messwerten mi_{TNT}, die einen Energiefluss über die internen Systemgrenzen sgi in zumindest eines der Netzsegmente N1, N2, N3 des Betriebsnetzes BN anzeigen, abgesenkt, um die Lasten im zugehörigen Anlagesegment A1, A2, A3 zu reduzieren. Weiterhin werden die die Lastgrenzen für die Anlagesegmente A1, A2, A3 bei Ermittlung von internen Energiefluss-Messwerten mi_{INT}, die einen Energiefluss über die internen Systemgrenzen sgi aus zumindest einem der Netzsegmente N1, N2, N3 des Betriebsnetzes BN anzeigen, angehoben, um in den betreffenden Anlagesegmenten A1, A2, A3 höhere Lasten zu erlauben.

Die Ermittlung von Energiefluss-Messwerten mi_{TNT}, mi_{ExT} für Energieflüsse an den Systemgrenzen sge, sgi erfolgt z.B. mittels Stromwandlern, wie sie in Klaus Heuck, Klaus-Dieter Dettmann, Detlef Schulz, »Elektrische Energieversorgung«, 8. Auflage, Springer Fachmedien Wiesbaden GmbH 2010, Seite 176, gezeigt und beschrieben sind. Dabei wird z.B. eine stromführende Kopplungsleitung durch einen Metallring geführt, in dem ein magnetischer Fluss induziert wird, welcher in einer Messleitung, die den Metallring mit Windungen umschliesst, ein Messsignal induziert, das die Grösse und die Flusssichtung des durch die Kopplungsleitung fliessenden Ausgleichsstromes anzeigt.

Ein Stromfluss in ein Netzsegment N1, N2 oder N3 hinein zeigt bei Unterfrequenz eine negative Energiebilanz an, gemäss der in diesem Netzsegment N1, N2, N3 mehr Energie konsumiert als von den lokalen Energiequellen zur Verfügung gestellt wird. Ein Stromfluss aus einem der Netzsegmente N1, N2 oder N3 in ein benachbartes Stromnetz zeigt bei Überfrequenz eine positive Energiebilanz an, gemäss der in diesem Netzsegment N1, N2, N3 weniger Energie konsumiert als von den lokalen Energiequellen zur Verfügung gestellt wird.

Die Frequenz des Wechselstromes, die mit einem Frequenzmessgerät gemessen wird, ist normalerweise im gesamten Verbundnetz einheitlich. Abweichungen der Netzfrequenz f_{N} von einem Sollwert von z.B. 16 2/3 Hz zeigen, dass das Energieangebot und der Energiebedarf durch die angeschlossenen Lasten gegebenenfalls erheblich voneinander abweichen. Bei Überfrequenz liegt eine reduzierte Nachfrage vor im Vergleich zur Energieproduktion und bei Unterfrequenz liegt eine erhöhte Nachfrage im Vergleich zur Energieproduktion vor.

Die Anlagesegmente A1, A2 und A3 sind zum Beispiel entsprechend den geographischen Gebieten und Grenzen aufgeteilt. In der Schweiz könnte das Gebiet des Kantons Tessin ein solches Anlagesegment A1, A2 oder A3 definieren. Gebietsabgrenzungen können auch derart vorgenommen werden, wie dies in der EP2894074B1 definiert ist. Für jedes der Anlagesegmente A1, A2 und A3 sind symbolisch stationäre Betriebseinheiten BE1, BE2 und mobile Betriebseinheiten BE3, BE4 gezeigt. Die mobilen Betriebseinheiten BE3, BE4 können grenzüberschreitend zwischen den Anlagesegmenten A1, A2 und A3 verkehren. Aus der EP2631152B1 ist bekannt, dass die mobilen Betriebseinheiten BE3, BE4 geortet werden können, sodass der aktuelle oder zukünftige Energiebedarf für alle Betriebseinheiten BE jeweils prognostizierbar und/oder messbar ist und auch den betreffenden Anlagesegmente A1, A2 oder A3 zugeordnet werden kann. Sofern Traktionsfahrzeuge aus dem Anlagesegment A1 ins Anlagesegment A3 gefahren wurden, können Traktionsleistungen und deren Änderungen nun dem Anlagesegment A3 zugeordnet werden.

Die Betriebseinheiten BE der Eisenbahnanlage A werden vom Laststeuersystem CR durch Steuersignale ci, cc, ct gesteuert, wobei die Steuersignale ci zur Steuerung oder Beeinflussung von Elementen der Infrastruktur, die Steuersignale cc zur Steuerung oder Beeinflussung von Komforteinrichtungen, wie Heizungen, insbesondere in mobilen Betriebseinheiten BE und die Steuersignale ct zur Steuerung oder Beeinflussung der Traktion der Zugfahrzeuge vorgesehen sind. Durch die Steuersignale ci, cc, ct können beispielsweise der Betriebsmodus und/oder die Arbeitsbereiche und/oder Grenzbereiche und Schwellenwerte oder weitere Rahmenbedingungen der Betriebseinheiten BE, darunter Speicher und Energiewandler, eingestellt werden. Beispielsweise erfolgen Abschaltungen oder Umschaltungen von Heizaggregaten auf tiefere oder höhere Temperaturen. Die Schaltungen können auch periodisch oder aperiodisch erfolgen. Bei Traktionsfahrzeugen können Beschleunigungswerte und Maximalgeschwindigkeiten hochgesetzt oder heruntergesetzt werden. Bei stochastisch auftretenden Lastspitzen wird z.B. bei Heizungen und/oder Traktionsmotoren für die Dauer der Spitze die Leistungsaufnahme teilweise bloss für wenige Sekunden reduziert.

Damit häufige Eingriffe via Steuersignale in eine Betriebseinheit nicht zu beschleunigter Alterung führen, werden bevorzugt Halbleiterschalter anstelle traditioneller Schalter eingesetzt.

Mittels der Elemente der Leitebene LE und der Steuerebene CE werden die Lasten bzw. die mobilen und/oder stationären Betriebseinheiten BN der Eisenbahnanlage A mit dem Ziel der Vermeidung oder Reduktion von Lastspitzen des Energiekonsums der Eisenbahnanlage A, dem Ziel der Vermeidung von Spitzenbelastungen in der Eisenbahnanlage A, dem Ziel der Vermeidung von Lastspitzen im Verbundnetz und in den Kopplungsleitungen, und dem Ziel der Anpassung an die Energieproduktion derart gesteuert, dass in der Gesamtbetrachtung ein optimales Ergebnis erzielt wird.

Die Gewichtung der einzelnen Ziele und damit verbundener Parameter, Grenzwerte und Vorschriften zur Steuerung und Regelung sind dabei durch den Systembetreiber vorzugsweise wahlweise einstellbar. Den einzelnen Zielen können Prioritäten oder Gewichtungsfaktoren zugeordnet werden, die in den Programmen der Leitebene LE und/oder der Steuerebene CE entsprechend berücksichtigt werden. Der zeitliche Verlauf dieser Prioritäten oder Gewichtungsfaktoren kann vorzugsweise ebenfalls wahlweise festgelegt und/oder durch variable Einflussgrössen vorzugsweise automatisch beeinflusst werden.

Sofern die Handelsware Energie knapp wird und die Energiekosten steigen, gewinnt das Ziel der Vermeidung von kurzfristigen Bezügen via Leistungsflüsse über Netzsegmentgrenzen i_{Ext} an Bedeutung. Sofern im Verbundnetz vermehrt Instabilitäten auftreten, gewinnt das Ziel der Anpassung an die Energieproduktion an Bedeutung. Sofern vermehrt Belastungsspitzen, z.B. Übertemperaturen sowie Ausfälle von Betriebseinheiten auftreten, gewinnt das Ziel der Vermeidung von Belastungsspitzen an Bedeutung.

Dem Leitprogramm lp der Leitebene LE und dem Steuerprogramm cp der Steuerebene können entsprechende Messgrössen zugeführt werden, die den Status der Betriebseinheiten BE anzeigen.

Zwischen dem Laststeuersystem CR und den Betriebseinheiten BE erfolgt vorzugsweise eine bidirektionale Datenübertragung über Datenbus-Systeme. Es können daher nicht nur Steuersignale ci, cc, ct von der Steuerebene CE zur Anlage A, sondern auch Informationen von der Anlage A zur Steuerebene CE, gegebenenfalls zur Leitebene LE, übertragen werden. Insbesondere können Statusinformationen dezentral gesammelt und zum Laststeuersystem CR und/oder zum Leitsystem LS übertragen werden.

Fig. 1 zeigt, dass in den Anlagesegmenten A1, A2, A3 symbolisch Messpunkte mp1, mp2 vorgesehen sind, an denen Messgrössen von Betriebseinheiten BE oder Teilen davon erfasst werden können. Vorzugsweise können in der Anlage A alle relevanten Grössen erfasst werden.

Vorzugsweise sind zumindest einige der Betriebseinheiten BE mit intelligenten Modulen versehen. Mit den intelligenten Modulen, die mit einem oder mehreren Prozessoren versehen sind, können Programme abgearbeitet werden, mittels denen die Steuersignale ci, cc, ct interpretiert und Stellgrössen für zugehörige Stelleinrichtungen und Regeleinrichtungen gebildet oder Eingangsgrössen und Parameter für Betriebsprogramme gebildet werden. Ferner können die intelligenten Module Informationen sammeln oder ermitteln und weiterleiten.

In vorzugsweisen Ausgestaltung ist vorgesehen, dass die intelligenten Module selbsttätig Lastprognosen für den zukünftigen Betrieb der ihnen zugeordneten Betriebseinheiten BE erstellen und vorzugsweise periodisch an das Leitsystem LS, welches die lokal ermittelten Lastprognosen bei der Bildung der Leitinformationen li berücksichtigt, oder an das Laststeuersystem CR, welches die lokal ermittelten Lastprognosen bei der Bildung der Steuersignale ci, cc, ct berücksichtigt, übertragen.

Beispielsweise sind die Betriebseinheiten BE mit einem Energiemessgerät verbunden, welches den Verlauf des Energiekonsums für gegebene Rahmenbedingungen aufzeichnet. Beispielsweise wird der Energiebedarf für eine Fahrt von A nach B mit einem vorgegebenen Geschwindigkeitsprofil aufgezeichnet. Sofern die Betriebseinheit BE unter denselben Rahmenbedingungen eine bereits früher registrierte Aufgabe erfüllt, kann anhand historischer Daten eine Lastprognose erstellt und an das Leitsystem LS oder an das Laststeuersystem CR übertragen werden. Nach dem Prinzip der Subsidiarität werden Aufgaben hierarchisch nach unten delegiert und die Systeme der Leitebene LE und der Steuerebene CE entsprechend entlastet.

Die intelligenten Module sind in vorzugsweisen Ausgestaltungen der Erfindung in der Lage, selbsttätig mit der Leitebene LE und/oder der Steuerebene CE ausgehandelte Leistungsbezugspläne abzuarbeiten. In diesem Fall werden die Steuersignale gemäss den Leistungsbezugsplänen lokal in den Betriebseinheiten, erzeugt. So können ganze Pools von Betriebseinheiten BE mithelfen, systematisch das Lastprofil im Betriebsnetz BN zu beeinflussen.

Bevorzugt sind diese Betriebseinheiten BE in der Lage, beim Zusammenbruch von Kommunikationsverbindungen selbsttätig, in Netz- oder Netzsegment-freundlicher Weise, den Betrieb gemäss Rückfall-Leistungsbezugsplänen weiterzuführen. Bevorzugt versuchen diese Betriebseinheiten BE periodisch den Wiederaufbau der Kommunikation mit zentralen IT-Systemen wie z.B. dem Leitsystem LS, damit die Optimierung basierend auf Informationen wie externen Betriebsdaten dx und internen Betriebsdaten db möglichst zeitnah weitergeführt werden kann.

In bevorzugten Ausgestaltungen werden innerhalb der Anlage A, oder individuell innerhalb der Anlagesegmente A1, A2, A3 Statusinformationen zu den Betriebseinheiten BE ermittelt, anhand denen lokal oder zentral das Regelungspotenzial innerhalb der Anlage A oder individuell innerhalb der Anlagesegmente A1, A2, A3, und/oder physikalische Belastungsgrenzen, und gegebenenfalls deren Überschreitung, ermittelt werden.

Zustandsinformationen über ein Netzsegment oder Anlagesegment können durch redundant vorhandene Messkanäle und Messmethoden erhoben und dem Leitsystem, allenfalls direkt der Steuerebene zugeführt werden, um die Ausfallsicherheit zu erhöhen.

Das ermittelte Regelungspotenzial wird im Leitsystem LS zur Bestimmung der Leitinformationen li oder im Laststeuersystem CR zur Bildung der Steuersignale ci, cc, ct verwendet. Ferner wird vorzugsweise auch die Lastgrenze unter Berücksichtigung des ermittelten Regelungspotenzials festgelegt.

Die ermittelten, physikalischen Belastungsgrenzen oder deren Überschreitung werden im Leitsystem LS zur Bestimmung der Leitinformationen li oder im Laststeuersystem CR zur Bildung der Steuersignale ci, cc, ct verwendet. Ferner wird vorzugsweise auch die Lastgrenze unter Berücksichtigung der ermittelten physikalischen Belastungsgrenzen festgelegt.

Vorzugsweise werden die Statusinformationen und die ermittelten Belastungsgrenzen in der Leitebene LE verarbeitet, um die Steuerung und Regelung der Anlage längerfristig zu optimieren. Informationen zur Überschreitung physikalischer Lastgrenzen werden hingegen vorzugsweise in der Steuerebene CE verarbeitet, um möglichst rasch Korrekturen einzuleiten.

Fig. 2 zeigt exemplarisch einen Verlauf der Gesamtlast PG in im Betriebsnetz BN von Fig. 1, einen Verlauf der Netzfrequenz f_{N} mit Abweichungen von einem Sollwert, Energieflüsse zwischen dem Betriebsnetz BN und wenigstens einem Nachbarnetz BNx und eine Belastungskurve si1 bzw. einen Temperaturverlauf für eine Betriebseinheit BE in einem Anlagesegment der Eisenbahnanlage A. Der Verlauf der Gesamtlast PG ist für eine Periode von 24 Stunden aufgezeichnet.

Eingezeichnet sind ferner eine konstante Lastgrenze LGk strichpunktierten Linie) und eine variable Lastgrenze LGv (fett durchgezogene Linie). Ferner sind exemplarisch fünf Situationen A, B, C, D und E eingezeichnet, für die nachstehend die Bestimmung des Verlaufs der Lastgrenze LGv erläutert wird.

Bei Verwendung einer konstanten Lastgrenze LGk wird die Anlage A derart gesteuert und/oder geregelt, dass Lastspitzen, die die konstante Lastgrenze LGk überschreiten durch Lastabschaltungen oder Laständerungen kompensiert werden.

Bei Verwendung einer variablen Lastgrenze LGv können unterschiedliche Einflüsse auf das elektrische System ES von Fig. 1 berücksichtigt werden. Durch Berücksichtigung dieser unterschiedlichen Einflüsse soll in der Gesamtbetrachtung eine Optimierung des Betriebs des elektrischen Systems ES erzielt werden. Zusätzlich sollen vorteilhafte Auswirkungen auf das gesamte Verbundnetz resultieren.

Für die gesamte Zeitperiode werden Frequenz-Messwerte f_{N} für die Netzfrequenz des Betriebsnetzes BN, externe Energiefluss-Messwerte mi_{EXT} für Energieflüsse an den Aussengrenzen des Betriebsnetzes BN, und interne Energiefluss-Messwerte mi_{INT}, sowie Statusinformationen oder Verläufe von Statusinformationen si1, si2 der Betriebseinheiten BE registriert. Als Statusinformationen werden z.B. die Temperaturen von Fahrleitungen oder Energiewandlern erfasst. Die gezeigte Kurve kann auch eine Funktion von mehreren Statusinformationen si1, si2 sein.

Durch Veränderung der variablen Lastgrenze LGv können die Einflüsse auf das Betriebsnetz BN oder das Verbundnetz, gegebenenfalls auch besondere Verhältnisse und Veränderungen im Betriebsnetz BN oder Verbundnetz, wie eine Verkettung von Kraftwerkausfällen, berücksichtigt werden, um den Betrieb hinsichtlich der Netzstabilität, der Betriebskosten und der Vermeidung von Überlastungen der Anlage A zu optimieren.

In der Situation A werden von der Anlage A Leistungen vom Betriebsnetz BN bezogen, die weit über einem Durchschnittswert liegen, an dem die konstante Lastgrenze LGk strichpunktiert eingezeichnet ist. Würde diese konstante Lastgrenze LGk als Kriterium der Steuerung und Regelung betrachtet, so wären erhebliche Lastabschaltungen notwendig, um die auftretenden Lastspitzen zu kompensieren. Lastabschaltungen können möglicherweise den Betrieb der Anlage A oder den Komfort der Benutzer beschränken und sollen nur dann erfolgen, wenn dies in der Gesamtbetrachtung erforderlich ist.

In vorzugsweisen Ausgestaltungen stellt das System, entweder ausgehend von der Leitebene LE oder der Steuerebene CE, Benutzern der gesteuerten Betriebseinheiten Information zur Verfügung, die z.B. auf mobile Geräte, wie Tablets, Smartphones und dergleichen übertragen werden. Dank der damit geschaffenen Transparenz können die Lastschaltmassnahmen mitverfolgt, verstanden und zusätzlich unterstützt werden.

In der Situation A zeigen die ermittelten Frequenz-Messwerte f_{N}, die ermittelten Energiefluss-Messwerte mi_{ExT} und die ermittelten Statusinformationen si1, si2, dass die Netzfrequenz fN über dem als ausgezogene Linie gezeichneten Sollwert liegt, dass ein Energiefluss vom Betriebsnetz BN in benachbarte Netze BNx erfolgt und dass die Belastung der Anlage A, z.B. die Temperaturen kritischer Anlagenteile und Betriebseinheiten BE niedrig sind. Die Lastgrenze LGv wird in der Situation A daher erhöht, um einen erhöhten Leistungsbezug vom Betriebsnetz BN zu erlauben und Lastabschaltungen weitgehend zu vermeiden. Lediglich überschiessende Lastspitzen LS (oval eingekreist) werden problemlos kompensiert. Die Kompensation dieser Lastspitzen LS kann durch ein Hilfsprogramm oder Hilfsmodul in bekannter Weise erfolgen. Der Regelungsbedarf wird daher auf ein Minimum reduziert. Durch Vermeidung von Lastabschaltungen wird der Komfort der Nutzer der Anlage A nicht beeinträchtigt. Ferner kann zu vorteilhaften Konditionen Energie in das elektrische System aufgenommen und gespeichert und gegebenenfalls zeitverschoben wieder abgegeben werden.

In der Situation B werden Leistungen vom Betriebsnetz BN bezogen, die unterhalb des Durchschnittswerts liegen. In dieser Situation würden konventionelle Systeme keinen Steuerungsbedarf oder Regelungsbedarf erkennen.

In der Situation B zeigen die ermittelten Frequenz-Messwerte f_{N} und die ermittelten Energiefluss-Messwerte mi_{ExT} hingegen, dass die Netzfrequenz fN unterhalb des Sollwerts liegt und dass ein Energiefluss aus benachbarten Netzen BNx in das Betriebsnetz BN erfolgt. Möglicherweise liegt eine ungünstige Wetterlage vor, bei der nur wenig Solarenergie in das Verbundnetz eingespeist werden kann. Die ermittelten Statusinformationen si1, si2 zeigen hingegen, dass die Belastung der Anlage A gering ist. Hinsichtlich der ermittelten Frequenz-Messwerte f_{N} und der ermittelten Energiefluss-Messwerte mi_{ExT} wird die Lastgrenze LGv heruntergesetzt, um das Verbundnetz oder das Betriebsnetz BN bzw. die direkt daran angeschlossenen Energiequellen zu entlasten.

In der Situation C werden Leistungen vom Betriebsnetz BN bezogen, die unterhalb des Durchschnittswerts liegen. In dieser Situation würden konventionelle Systeme wiederum keinen Steuerungsbedarf oder Regelungsbedarf erkennen.

In der Situation C zeigen die ermittelten Frequenz-Messwerte f_{N} und die ermittelten Energiefluss-Messwerte mi_{ExT} zudem, dass die Netzfrequenz fN oberhalb des Sollwerts liegt und dass ein Energiefluss vom Betriebsnetz BN in benachbarte Netze BNx erfolgt. Möglicherweise liegt eine optimale Wetterlage mit maximaler Sonneneinwirkung vor, bei der hinreichend Solarenergie in das Verbundnetz, gegebenenfalls in das Betriebsnetz BN eingespeist wird.

Die ermittelten Statusinformationen si1, si2 zeigen hingegen, dass die Belastung der Anlage A aufgrund der starken Sonneneinstrahlung hoch ist und sich kritische Teile der Anlage A stark erwärmt haben. Obwohl genügend Energie vorhanden ist und auch nur relativ wenig Energie an die Anlage A abgegeben wird, wird die Lastgrenze LGv heruntergesetzt, um die Anlage A zu entlasten. Es erfolgen somit Lastreduktionen nicht zur Entlastung des Betriebsnetzes BN, sondern zur Reduktion der Belastung der Anlage A. Schäden an der Anlage A durch Übertemperaturen und entsprechende Unterbrüche in der Bahnproduktion können vermieden werden. Dazu können auch Maximalwerte max, z.B. Maximalwerte für Betriebstemperaturen, festgelegt werden, deren Überschreiten ein Absenken der Lastgrenze LGv und gegebenenfalls eine unverzügliche Reaktion des Laststeuersystems CR zur Folge hat. Betriebstemperaturen zeigen lokale Belastungen an; entsprechend wird das Lastmanagement bevorzugt lokal vorhandene mobile oder stationäre Betriebseinheiten BE beeinflussen.

In den Situationen D und E liegt hingegen wiederum eine geringe Belastung der Anlage vor. Situation D ist vergleichbar zu Situation A. In Situation E wurden keine wesentlichen Energieflüsse über die Systemgrenzen ermittelt. Die Netzfrequenz f_{N} ist auf dem Sollwert. In dieser Situation wird die variable Lastgrenze LGv auf den Durchschnittswert der exemplarisch gezeigten konstanten Lastgrenze LGk zurückgeführt, an der im Wesentlichen eine Laststeuerung oder Lastregelung erfolgt, die hinsichtlich der Kosten optimiert ist. Beispielsweise erfolgt in dieser Situation E eine konventionelle Laststeuerung nach einem Verfahren, wie es z.B. aus der EP3056379A1 bekannt ist. Das erfindungsgemässe Verfahren kann somit mit beliebigen Laststeuerungsverfahren kombiniert werden, bei denen die Laststeuerung hinsichtlich einer Lastgrenze erfolgt. Diese Lastgrenze wird hingegen durch das erfindungsgemässe Verfahren bestimmt.

Wie dies bereits beschrieben wurde, wird in vorzugsweisen Ausgestaltungen vorzugsweise das Regelungspotenzial der Anlage A ermittelt. Bei einem hohen Regelungspotenzial können die Lastgrenzen LGv grosszügiger bemessen werden. Viele schaltbare Lasten (= hohes Regelpotential) erlauben, die Lastgrenze tiefer zu setzen. Weniger schaltbare Lasten zwingen, den Schwellwert resp. die Lastgrenze höher zu setzen. Bei einem geringen Regelungspotenzial wird eine erhöhte Lastgrenze LGv* vorgesehen. Je kleiner das Regelungspotential, sprich die Anzahl der Lasten, die geschaltet werden könnten, umso höher muss die Lastgrenze liegen.

In Fig. 2 verlaufen die Flanken der höheren Lastgrenze LGv und der reduzierten Lastgrenze LGv* parallel. Typischerweise erfolgt bei einem geringen Regelungspotenzial hingegen eine nichtlineare Reduktion der Lastgrenze LGv. Insbesondere werden die Maximalwerte der Lastgrenze LGv reduziert oder gestaucht.

In einer weiteren Ausführung ist vorgesehen, dass bei Ausfall von Betriebseinheiten BN die dadurch entstehende Reduktion des Regelungspotentials durch Steuerung anderer Betriebseinheiten BN wenigstens teilweise zu kompensieren.

## Patentansprüche

1. Verfahren zur Laststeuerung in einem elektrischen System (ES), insbesondere einem Eisenbahnsystem,
mit einer elektrische Anlage (A), die in Anlagesegmente (A1, A2, A3) aufgeteilt ist und die von einem Betriebsnetz (BN) gespeist wird, das in einem Netzverbund mit benachbarten Stromnetzen (BN1, BN2, BN3, BN4), die über externe Systemgrenzen (sge) bedarfsweise elektrische Energie austauschen, arbeitet und/oder das in Netzsegmente (N1, N2, N3) aufgegliedert ist, die zu den Anlagesegmenten (A1, A2, A3) korrespondieren und die über interne Systemgrenzen (sgi) bedarfsweise elektrische Energie austauschen, und
mit einem Leitsystem (LS) mit einem Leitprogramm (lp), welches die vom Betriebsnetz (BN) abgegebenen Leistungen sowie Lastgrenzen oder deren Verläufe für das Betriebsnetz (BN) oder die Netzsegmente (N1, N2, N3) überwacht und entsprechende Leitinformationen (li) zur Laststeuerung bildet und an ein Laststeuersystem (CR) überträgt, das die Leitinformationen (li) anhand eines Steuerprogramms (cp) auswertet und Steuersignale (ci, cc, ct) zur Steuerung von Betriebseinheiten (BE) der elektrischen Anlage (A) bildet, wobei
Frequenz-Messwerte (f_{N}) für die Netzfrequenz des Betriebsnetzes (BN) und Energiefluss-Messwerte (mi_{iNT}, mi_{ExT}) für Energieflüsse an den externen Systemgrenzen (sge) und/oder an den internen Systemgrenzen (sgi) ermittelt und die Leitinformationen (li) unter Berücksichtigung der Frequenz-Messwerte (f) und der Energiefluss-Messwerte (mi_{iNT}, mi_{ExT}) gebildet werden.

2. Verfahren nach Anspruch 1, **dadurch gekennzeichnet, dass** die Lastgrenzen (LGv) variabel sind und in Abhängigkeit der ermittelten Frequenz-Messwerte (f_{N}) für die Netzfrequenz des Betriebsnetzes (BN) und/oder der ermittelten Energiefluss-Messwerte (mi_{iNT}, mi_{ExT}) und/oder in Abhängigkeit von Statusinformationen (si1, si2), wie Temperaturen oder Temperaturverläufen, der Betriebseinheiten (BE) vorzugsweise für jedes der Netzsegmente (N1, N2, N3) individuell festgelegt werden.

3. Verfahren nach Anspruch 1 oder 2, **dadurch gekennzeichnet, dass** die Lastgrenzen (LGv) in Abhängigkeit der Frequenz-Messwerte (f_{N}) festgelegt werden, wobei die Lastgrenzen (LGv) bei Ermittlung von Frequenz-Messwerten (f_{N}), die tiefer sind als ein Frequenz-Sollwert, abgesenkt werden, um die Lasten im Betriebsnetz (BN) zu reduzieren, und bei Ermittlung von Frequenz-Messwerten (f_{N}), die höher sind als ein Frequenz-Sollwert, angehoben werden, um höhere Lasten im Betriebsnetz (BN) zu erlauben.

4. Verfahren nach Anspruch 1, 2 oder 3, **dadurch gekennzeichnet, dass** die Lastgrenzen (LGv) in Abhängigkeit der externen Energiefluss-Messwerte (mi_{EXT}) geändert werden, wobei die Lastgrenzen (LGv) bei Ermittlung von externen Energiefluss-Messwerten (mi_{EXT}), die einen Energiefluss über die externen Systemgrenzen (sge) in das Betriebsnetz (BN) anzeigen, abgesenkt werden, um die Lasten im Betriebsnetz (BN) bei Unterfrequenz zu reduzieren, und bei Ermittlung von externen Energiefluss-Messwerten (mi_{EXT}), die einen Energiefluss über die externen Systemgrenzen (sge) aus dem Betriebsnetz (BN) anzeigen, bei Überfrequenz angehoben werden, um höhere Lasten im Betriebsnetz (BN) zu erlauben.

5. Verfahren nach einem der Ansprüche 1 - 4, **dadurch gekennzeichnet, dass** die Lastgrenzen (LGv) in Abhängigkeit der internen Energiefluss-Messwerte (mi_{INT}) oder (internen) Zustandsgrössen geändert werden, dass die Lastgrenzen (LGv) für die Anlagesegmente (A1, A2, A3) bei Ermittlung von internen Energiefluss-Messwerten (mi_{INT}), die einen Energiefluss über die internen Systemgrenzen (sgi) in zumindest eines der Netzsegmente (N1, N2, N3) des Betriebsnetzes (BN) anzeigen, abgesenkt werden, um die Lasten in diesen Anlagesegmenten (A1, A2, A3) zu reduzieren, und/oder dass die Lastgrenzen (LGv) für die Anlagesegmente (A1, A2, A3) bei Ermittlung von internen Energiefluss-Messwerten (mi_{INT}), die einen Energiefluss über die internen Systemgrenzen (sgi) aus zumindest einem der Netzsegmente (N1, N2, N3) des Betriebsnetzes (BN) anzeigen, angehoben werden, um in diesen Anlagesegmenten (A1, A2, A3) höhere Lasten zu erlauben.

6. Verfahren nach einem der Ansprüche 1 - 5, **dadurch gekennzeichnet, dass** dem Leitsystem (LS) systeminterne Daten (db), wie Betriebsdaten, von einem Betriebsrechner (BR) sowie systemexterne Daten (dx), wie Wetterprognosen und Kostendaten der elektrischen Energie, von einem externen Datenserver (XR) zugeführt werden und dass das Leitsystem (LS) unter Berücksichtigung der systeminternen und der systemexternen Daten (db, dx) Lastgrenzen (LGv) oder zukünftige Verläufe der Lastgrenzen (LGv) für das Betriebsnetz (BN) und/oder die Netzsegmente (N1, N2, N3) oder Belastungsgrenzen oder zukünftige Verläufe der Belastungsgrenzen der Anlage (A) oder der Anlagesegmente (A1, A2, A3) bestimmt.

7. Verfahren nach einem der Ansprüche 1 - 6, **dadurch gekennzeichnet, dass** innerhalb der Anlage (A) oder individuell innerhalb der Anlagesegmente (A1, A2, A3) Statusinformationen (si1, si2) zu den Betriebseinheiten (BE) ermittelt werden und dass anhand der Statusinformationen das Regelungspotenzial innerhalb der Anlage (A) oder individuell innerhalb der Anlagesegmente (A1, A2, A3) und/oder physikalische Belastungsgrenzen und gegebenenfalls deren Überschreitung ermittelt werden und dass das ermittelte Regelungspotenzial und/oder die ermittelten physikalischen Belastungsgrenzen oder deren Überschreitung im Leitsystem (LS) zur Bestimmung der Leitinformationen (li) oder im Laststeuersystem (CR) zur Bildung der Steuersignale (ci, cc, ct) verwendet werden.

8. Verfahren nach einem der Ansprüche 1 - 7, **dadurch gekennzeichnet, dass** für Betriebseinheiten (BE), wie Fahrzeuge, Heizungen oder Beleuchtungen, mobile oder stationäre Batterien, Elektrolyseure, oder Brennstoffzellen oder Gasturbinen, ein minimaler Energiebedarf, wie ein minimaler Energiebedarf für den Notfallbetrieb, und der aktuelle Energiebedarf vorzugsweise periodisch ermittelt werden, wonach durch Bildung der Differenz des aktuellen und des minimalen Energiebedarfs das Regelungspotenzial zur Reduktion der Last ermittelt wird und/oder dass für Betriebseinheiten (BE), wie Fahrzeuge oder Heizungen, ein maximaler Energiebedarf und der aktuelle Energiebedarf vorzugsweise periodisch ermittelt werden, wonach durch Bildung der Differenz des aktuellen und des maximalen Energiebedarfs das Regelungspotenzial zur Erhöhung der Last ermittelt wird.

9. Verfahren nach einem der Ansprüche 1 - 8, **dadurch gekennzeichnet, dass** das Leitprogramm (lp) des Leitsystems (LS) zur Übernahme oder Erstellung und Verarbeitung von Lastprognosen und zur entsprechenden Bildung von Leitinformationen (li) ausgebildet ist und/oder dass das Steuerprogramm (cp) des Laststeuersystems (CR) zur Umsetzung der Leitinformationen (li) in Steuersignale (ci, cc, ct) geeignet ist.

10. Verfahren nach einem der Ansprüche 1 - 9, **dadurch gekennzeichnet, dass** zumindest einige der Betriebseinheiten (BE) mit intelligenten Modulen versehen sind, welche selbsttätig Lastprognosen für ihren zukünftigen Betrieb erstellen und vorzugsweise periodisch an das Leitsystem (LS), welches die Lastprognosen bei der Bildung der Leitinformationen berücksichtigt, oder an das Laststeuersystem (CR), welches die Lastprognosen bei der Bildung der Steuersignale (ci, cc, ct) berücksichtigt, übertragen.

11. Verfahren nach einem der Ansprüche 1 - 10, **dadurch gekennzeichnet, dass** innerhalb der Anlage (A) oder individuell innerhalb der Anlagesegmente (A1, A2, A3) Temperaturen von Betriebseinheiten (BE), wie Fahrzeugen, Heizungen, Fahrleitungen oder Energiewandler, ermittelt werden und dass anhand der Temperaturen die physikalischen Belastungsgrenzen der Anlage (A), der Anlagesegmente (A1, A2, A3) oder der Betriebseinheiten (BE) ermittelt werden und dass die Betriebseinheiten (BE) derart gesteuert werden, dass die Belastungsgrenzen der Anlage (A), der Anlagesegmente (A1, A2, A3) oder der Betriebseinheiten (BE) nicht überschritten werden.

12. Verfahren nach einem der Ansprüche 1 - 11 **dadurch gekennzeichnet, dass** zur Reduktion der Belastung des Betriebsnetzes die Lastgrenzen (LGv) bei Überschreitung von Temperaturgrenzwerten für die betreffenden Anlagesegmente (A1, A2, A3) abgesenkt und ausgewählte Betriebseinheiten (BE) permanent abgeschaltet, phasenweise abgeschaltet oder in einen Notbetrieb versetzt werden.

13. Verfahren nach einem der Ansprüche 1 - 12, **dadurch gekennzeichnet, dass** für die den Anlagesegmenten (A1, A2, A3) zugeordneten Netzsegmente (N1, N2, N3) die Leistungsbilanzen ermittelt und vorzugsweise periodisch an das Leitsystem (LS), welches die Leistungsbilanzen bei der Bildung der Leitinformationen (li) berücksichtigt, oder an das Laststeuersystem (CR), welches die Lastprognosen bei der Bildung der Steuersignale (ci, cc, ct) berücksichtigt, übertragen werden.

14. Verfahren nach einem der Ansprüche 1 - 13, **dadurch gekennzeichnet, dass** das Leitsystem (LS) die Anlage (A) in einem Modell abbildet und zumindest einem Teil der Betriebseinheiten (BE) je ein Software-Objekt mit Betriebsparametern und Eigenschaften zuordnet, die durch Kommunikation mit den zugehörigen Betriebseinheiten (BE) aktualisiert werden, wonach anhand des Modells Lastprognosen erstellt und aktuelle und/oder vorausschauende Leitinformationen (li) gebildet werden und dass die Anmeldung und Abmeldung der Betriebseinheiten (BE) in der Anlage (A) durch das Leitsystem im Modell automatisch nachgeführt wird.

15. Verfahren nach einem der Ansprüche 1 - 14, **dadurch gekennzeichnet, dass** Laststeuersystem (CR) die Betriebseinheiten (BE) durch die Steuersignale (ci, cc, ct) derart steuert, dass die vorgegebenen Lastgrenzen (LGv) nicht überschritten werden und die Betriebseinheiten (BE) deren Funktionen zeitversetzt erfüllen.

16. Verfahren nach einem der Ansprüche 1 - 15, **dadurch gekennzeichnet, dass** das Leitsystem (LS) vorzugsweise unter Berücksichtigung der Frequenz-Messwerte (f_{N}) für die Netzfrequenz des Betriebsnetzes (BN) und/oder der Energiefluss-Messwerte (mi_{INT}, mi_{EXT}) Leitinformationen (li) zur Speicherung von Energie oder zur Freigabe gespeicherter Energie in der Anlage (A) oder in den Anlagesegmenten (A1, A2, A3) festlegt und dass das Laststeuersystem (CR) die Energiespeicherung und Energiefreigabe in den betreffenden Betriebseinheiten (BE), insbesondere in Batterien und Heizsystemen, unter Beachtung der vorgegebenen Lastgrenzen (LGv) erfüllt.

17. Elektrisches System (ES), insbesondere Eisenbahnsystem, mit einer elektrische Anlage (A), die in Anlagesegmente (A1, A2, A3) aufgeteilt ist und die mit einem Betriebsnetz (BN) verbunden ist, das in einen Netzverbund mit benachbarten Stromnetzen (BN1, BN2, BN3, BN4), die über externe Systemgrenzen (sge) bedarfsweise elektrische Energie austauschen, eingebunden ist und/oder das in Netzsegmente (N1, N2, N3) aufgegliedert ist, die zu den Anlagesegmenten (A1, A2, A3) korrespondieren und die über interne Systemgrenzen (sgi) bedarfsweise elektrische Energie austauschen, mit einem Leitsystem (LS) mit einem Leitprogramm (lp), das zur Überwachung der vom Betriebsnetz (BN) abgegebenen Leistungen sowie von Lastgrenzen (LGv) oder deren Verläufen für das Betriebsnetz (BN) oder die Netzsegmente (N1, N2, N3) und zur Übertragung entsprechend gebildeter Leitinformationen (li) zur Laststeuerung an ein Laststeuersystem (CR) vorgesehen ist, das ein Steuerprogramm (cp) umfasst, anhand dessen die Leitinformationen (li) auswertbar und Steuersignale (ci, cc, ct) zur Steuerung von überwachten Betriebseinheiten (BE) der elektrischen Anlage (A) bildbar sind, wobei
Frequenz-Messwerte (f_{N}) für die Netzfrequenz (f_{N}) des Betriebsnetzes (BN) und Energiefluss-Messwerte (mi_{iNT}, mi_{ExT}) für Energieflüsse an den externen Systemgrenzen (sge) und/oder an den internen Systemgrenzen (sgi) ermittelbar und die Leitinformationen (li) unter Berücksichtigung der Frequenz-Messwerte (f_{N}) und der Energiefluss-Messwerte (mi_{iNT}, mi_{ExT}) generierbar sind.

18. Elektrisches System (ES) nach Anspruch 17, **dadurch gekennzeichnet, dass** zumindest einige der Betriebseinheiten (BE) mit intelligenten Modulen versehen sind, welche zur selbsttätigen Erstellung von Lastprognosen für die zugehörigen Betriebseinheiten (BE) dienen und die vorzugsweise periodisch an das Leitsystem (LS), welches die Lastprognosen bei der Bildung der Leitinformationen berücksichtigt, oder an das Laststeuersystem (CR) übertragbar sind, welches die Lastprognosen bei der Bildung der Steuersignale (ci, cc, ct) berücksichtigt.

19. Elektrisches System (ES) nach Anspruch 17 oder 18, **dadurch gekennzeichnet, dass** die Betriebseinheiten (BE) mobile Betriebseinheiten (BE) sind, wie Zugfahrzeuge und Nutzfahrzeuge, oder stationäre Betriebseinheiten (BE), wie Vorrichtungen zur Umwandlung von elektrischer Energie oder Übertragung und Umwandlung von elektrischen Strom, und dass zumindest einige der Betriebseinheiten (BE) mit intelligenten Modulen versehen sind, welche zur selbsttätigen Erstellung von Lastprognosen für die zugehörigen Betriebseinheiten (BE) und zur vorzugsweise periodischen Übertragung der Lastprognosen an das Leitsystem (LS) vorgesehen sind.
